# EUROPEAN PATENT SPECIFICATION

(11) **EP 1 188 790 B1**
(45) Date of publication and mention of the grant of the patent: **16.05.2007**
(21) Application number: 00906591.3
(22) Date of filing: 01.03.2000
(51) Int. Cl.: C08L 9/02, C08K 5/09, C08L 23/02, C08L 15/00, C08K 5/098, C08K 7/02, C08J 5/10

(54) **FIBER-REINFORCED RUBBER COMPOSITION CROSSLINKABLE WITH ORGANIC PEROXIDE AND PROCESS FOR PRODUCING THE SAME**
FASERVERSTÄRKTE KAUTSCHUKZUSAMMENSETZUNG, VERNETZBAR MIT ORGANISCHEM PEROXID UND VERFAHREN ZUR HERSTELLUNG DERSELBEN
COMPOSITION DE CAOUTCHOUC RENFORCEE PAR DES FIBRES, RETICULABLE AU MOYEN DE PEROXYDE ORGANIQUE, ET SON PROCEDE DE PRODUCTION

(30) Priority: 04.03.1999 JP 5677399
(43) Date of publication of application: 20.03.2002
(73) Proprietor: NIPPON ZEON CO., LTD., Chiyoda-ku Tokyo 100-8323 (JP)
(72) Inventor: NOMOTO, Hirohumi, Research & Development Center, Kawasaki-shi, Kanagawa 210-9507 (JP); KAWANAKA, Takahumi, Research & Development Center, Kawasaki-shi, Kanagawa 210-9507 (JP); TSUKADA, Akira, Research & Development Center, Kawasaki-shi, Kanagawa 210-9507 (JP)
(74) Representative: Vossius & Partner
(86) International application number: PCT/JP2000/001189
(87) International publication number: WO 2000/052093

(56) References cited:
- EP-A- 0 452 488
- EP-A2- 0 454 411
- JP-A- 6 207 050
- JP-A- 9 087 434
- US-A- 4 983 678
- US-A- 5 312 869
- PATENT ABSTRACTS OF JAPAN vol. 1997, no. 07, 31 July 1997 (1997-07-31) & JP 9 087434 A (UBE IND LTD), 31 March 1997 (1997-03-31)
- PATENT ABSTRACTS OF JAPAN vol. 0185, no. 68 (C-1266), 31 October 1994 (1994-10-31) & JP 6 207050 A (NIPPON ZEON CO LTD), 26 July 1994 (1994-07-26)
- PATENT ABSTRACTS OF JAPAN vol. 0180, no. 52 (C-1158), 27 January 1994 (1994-01-27) & JP 5 271472 A (BANDO CHEM IND LTD), 19 October 1993 (1993-10-19)

## Description

The present invention relates to an organic peroxide-crosslinkable fiber-reinforced rubber composition comprising a nitrile group-containing highly saturated copolymer rubber, polyolefin and a metal salt of an α, β-ethylenically unsaturated lower carboxylic acid, and further comprising staple fibers of a thermoplastic polymer having amide bonds in the backbone chain, dispersed in the rubber composition. It further relates to a process for producing the organic peroxide-crosslinkable fiber reinforced rubber composition.

A nitrile group-containing highly saturated copolymer rubber (hereinafter abbreviated to "HNBR" for brevity) is produced, for example, by a process of hydrogenating a nitrile group-containing copolymer rubber such as, for example, an acrylonitrile-butadiene copolymer rubber. A crosslinked product of HNBR is known as a rubber material having good heat resistance and mechanical strengths as compared with conventional nitrile group-containing copolymer rubbers and other conventional rubbers. The rubber material of HNBR is used, for example, belts such as a timing belt, hoses, and boots.

When a metal salt of an α,β-ethylenically unsaturated lower carboxylic acid, such as zinc methacrylate, is incorporated in HNBR to prepare a mixture, and the mixture is crosslinked with an organic peroxide, a crosslinked rubber product having enhanced tensile strength, abrasion resistance and fatigue resistance can be obtained. This crosslinked rubber product has excellent performances as compared with a crosslinked rubber product made by crosslinking HNBR without incorporation of metal salt of an α, β-ethylenically unsaturated lower carboxylic acid, with a sulfur-containing crosslinking agent.

However, the crosslinked rubber product made by crosslinking with an organic peroxide a mixture of HNBR with a metal salt of an α, β-ethylenically unsaturated lower carboxylic acid has an undesirably low tensile stress, and thus, it is desired to provide a crosslinked rubber product having an enhanced tensile stress. Further, it is also desired to more enhance the abrasion resistance and fatigue resistance of this crosslinked rubber product.

It is widely known to disperse staple fibers in a rubber material to provide a rubber material having improved mechanical strengths and abrasion resistance (for example, see Japanese Unexamined Patent Publication No. H9-87434). However, when a rubber composition is kneaded with staple fibers, the viscosity of a rubber/staple fiber mixture is enhanced to a great extent, which leads to reduction of dispersibility of staple fibers in the rubber/staple fiber mixture, and further the temperature of the rubber/staple fiber mixture rises to a great extent, which occasionally leads to fusion and disappearance of the staple fibers. If the kneading of a rubber composition with staple fibers is carried out at an enhanced shear rate to improve dispersibility of the staple fibers, the staple fibers are liable to be broken during kneading, and the intended reinforcing effect for improving mechanical strength and other properties cannot be obtained.

In view of the foregoing, an object of the present invention is to provide a crosslinkable rubber composition capable of providing a crosslinked product having an enhanced tensile stress, as compared with the conventional crosslinked product obtained by crosslinking with an organic peroxide a crosslinkable rubber composition comprising a nitrile group-containing highly saturated copolymer rubber and a metal salt of an α, β-ethylenically unsaturated lower carboxylic acid, while the crosslinked product possesses excellent abrasion resistance and fatigue resistance.

Another object is to provide a process for producing the above-mentioned crosslinkable rubber composition.

The present inventors made extensive researches to achieve the above-mentioned objects and found that a crosslinked product obtained by crosslinking with an organic peroxide a crosslinkable rubber composition comprising HNBR having incorporated therein staple fibers has a higher tensile stress but lower abrasion resistance and fatigue resistance, than those of a crosslinked product obtained by crosslinking with an organic peroxide a crosslinkable rubber composition comprising HNBR having incorporated therein a metal salt of an α, β-ethylenically unsaturated lower carboxylic acid.

The present inventors further found that a crosslinked product obtained by crosslinking with an organic peroxide a crosslinkable rubber composition prepared by previously kneading HNBR with a metal salt of an α, β-ethylenically unsaturated lower carboxylic acid, and then incorporating therein staple fibers, has remarkably improved abrasion resistance and fatigue resistance.

The present inventors further found that, when a crosslinkable rubber composition comprising HNBR and nylon staple fibers is incorporated with a metal salt of an α, β-ethylenically unsaturated lower carboxylic acid, the viscosity of the crosslinkable rubber composition during kneading is reduced and thus the nylon staple fibers can be dispersed to a sufficient extent by kneading by a large scale kneader, and consequently, a crosslinked rubber product having improved abrasion resistance and other improved properties can be obtained. The present invention has been completed based on the above-mentioned findings.

Thus, in accordance with the present invention, there is provided (1) an organic peroxide-crosslinkable fiber-reinforced rubber composition according to claim 1.

There is further provided (2) a process according to claim 8.

The present invention will now be described in detail.

The organic peroxide-crosslinkable fiber-reinforced rubber composition of the present invention comprises HNBR (A), polyolefin (B) and a metal salt of an α, β-ethylenically unsaturated lower carboxylic acid (C), and further, uniformly dispersed therein, staple fibers (D) made of a thermoplastic polymer having amide bonds in the backbone chain. This crosslinkable fiber-reinforced rubber composition of the present invention can be crosslinked with an organic peroxide.

The ingredients (A) through (D) in the crosslinkable rubber composition of the present invention will be explained.

HNBR (A) used in the present invention includes a rubber prepared by copolymerizing an α, β-ethylenically unsaturated nitrile monomer with other monomer or monomers copolymerizable with the α, β-ethylenically unsaturated nitrile monomer, and a rubber obtained by hydrogenation of a copolymer prepared by copolymerizing an α, β-ethylenically unsaturated nitrile monomer with other monomer or monomers copolymerizable with the α, β-ethylenically unsaturated nitrile monomer.

HNBR has an iodine value not larger than 120, preferably value not larger than 80, and more preferably not larger than 50. Iodine value is an indication demonstrating the degree of unsaturation of carbon-carbon bond in a rubber molecule, and expressed in terms of amount in gram of iodine capable of being added to 100 g of a rubber. When the iodine value is too large, a crosslinked rubber product of a crosslinkable HNBR rubber composition has reduced heat resistance and mechanical strengths.

HNBR has a Mooney viscosity (ML₁₊₄, 100°C) preferably in the range of 15 to 200, more preferably 30 to 150 and especially preferably 45 to 100. When the Mooney viscosity is too small, a crosslinked rubber product of a crosslinkable HNBR rubber composition has reduced mechanical strengths and other properties. In contrast, when the Mooney viscosity is too large, a crosslinkable rubber composition of the present invention has poor processability.

The α, β-ethylenically unsaturated nitrile monomer includes, for example, acrylonitrile, methacrylonitrile and α -chloroacrylonitrile. Of these, acrylonitrile is preferable. These monomers may be used either alone or in combination. The content of α, β-ethylenically unsaturated nitrile monomer units in HNBR is preferably in the range of 10% to 60% by weight, and more preferably 10% to 55% by weight, and especially preferably 10% to 50% by weight. The optimum amount thereof is chosen depending upon the use of the crosslinkable fiber-reinforced rubber composition of the present invention.

The monomer to be copolymerized with an α, β-ethylenically unsaturated nitrile monomer includes, for example, conjugated diene monomers, non-conjugated diene monomers and α-olefin monomers. In the case where an α, β-ethylenically unsaturated nitrile monomer is copolymerized with a conjugated diene monomer, the resulting copolymer rubber has a large iodine value and thus, carbon-carbon unsaturated bonds in the copolymer rubber are hydrogenated by a known method to reduce the iodine value for use in the present invention.

As specific examples of the conjugated diene monomer, there can be mentioned 1,3-butadiene, 2,3-dimethyl-1,3-butadiene, isoprene and 1,3-pentadiene. Of these, 1,3-butadiene is preferable. In the case where HNBR is a hydrogenation product of a copolymer of an α, β-ethylenically unsaturated nitrile monomer, a conjugated diene monomer and an optional copolymerizable monomer or monomers, the content of conjugated diene monomer units in the copolymer is preferably 30% to 90% by weight, more preferably 40% to 90% by weight and especially preferably 50% to 90% by weight.

The non-conjugated diene monomer preferably includes those which have 5 to 12 carbon atoms, such as, for example, 1,4-pentadiene, 1,4-hexadiene, vinylnorbornene and dicyclopentadiene.

The α-olefin monomer preferably includes those which have 2 to 12 carbon atoms, such as, for example, ethylene, propylene, 1-butene, 4-methyl-1-pentene, 1-hexene and 1-octene.

The optional monomer copolymerizable with an α, β-ethylenically unsaturated nitrile monomer includes, for example, α, β-ethylenically unsaturated carboxylic acid esters, aromatic vinyl monomers, fluorine-containing vinyl monomers, α,β-ethylenically unsaturated monocarboxylic acids, α, β-ethylenically unsaturated dicarboxylic acids and anhydrides thereof, and antioxidants copolymerizable with these monomers.

As specific examples of the α,β-ethylenically unsaturated carboxylic acid esters, there can be mentioned alkyl acrylates and alkyl methacrylates, which have 1 to 18 carbon atoms in the alkyl group, such as methyl acrylate, ethyl acrylate, n-dodecyl acrylate, methyl methacrylate and ethyl methacrylate; alkoxyalkyl acrylates and alkoxyalkyl methacrylates, which have 2 to 12 carbon atoms in the alkoxyalkyl group, such as methoxymethyl acrylate and methoxyethyl methacrylate; cyanoalkyl acrylates and cyanoalkyl methacrylates, which have 2 to 12 carbon atoms in the cyanoalkyl group, such as α-cyanoethyl acrylate, β-cyanoethyl acrylate and cyanobutyl methacrylate; hydroxyalkyl acrylates such as 2-hydroxyethyl acrylate and hydroxypropyl acrylate; monoalkyl or dialkyl esters of α, β-ethylenically unsaturated dicarboxylic acids such as monoethyl maleate, dimethyl maleate, dimethyl fumarate, dimethyl itaconate, diethyl itaconate and n-butyl itaconate; amino group-containing α, β-ethylenically unsaturated carboxylic acid esters such as dimethylaminomethyl acrylate and diethylaminoethyl acrylate; fluoroalkyl group-containing acrylates and fluoroalkyl group-containing methacrylates, such as trifluoroethyl acrylate and tetrafluoropropyl methacrylate; and fluoro-substituted benzyl acrylates and fluoro-substituted benzyl methacrylates, such as fluorobenzyl acrylate and fluorobenzyl methacrylate.

As specific examples of the aromatic vinyl monomer, there can be mentioned styrene, α-methylstyrene and vinylpyridine.

As specific examples of the fluorine-containing vinyl monomer, there can be mentioned fluoroethyl vinyl ether, fluoropropyl vinyl ether, o-trifluoromethylstyrene, vinyl pentafluorobenzoate, difluoroethylene and tetrafluoroethylene. As specific examples of the α, β-ethylenically unsaturated monocarboxylic acid, there can be mentioned acrylic acid and methacrylic acid. As specific examples of the α,β-ethylenically unsaturated dicarboxylic acid and its anhydride, there can be mentioned itaconic acid, fumaric acid and maleic acid, and maleic anhydride, respectively.

As specific examples of the antioxidant copolymerizable with the above-recited monomers, there can be mentioned N-(4-anilionophenyl)acrylamide, N-(4-anilionophenyl)-methacrylamide, N-(4-anilionophenyl)cinnamamide, N-(4-anilionophenyl)crotonamide, N-phenyl-4-(3-vinylbenzyloxy)-aniline and N-phenyl-4-(4-vinylbenzyloxy)aniline. These copolymerizable monomers may be used as a combination of at least two thereof.

Polyolefin (B) used in the present invention is a homopolymer of an α-olefin monomer or a copolymer of at least two α-olefin monomers, which may be either crystalline or non-crystalline. In the case of crystalline polyolefin, the polyolefin preferably has a melting point in the range of 80 to 250°C, more preferably 100 to 150°C, and most preferably 110 to 130°C. Polyolefin preferably has a melt flow index in the range of 1 to 10 g/10 min and more preferably 5 to 8 g/10 min.

The polyolefin includes, for example, a homopolymer of an α-olefin monomer or a copolymer of at least two α-olefin monomers , wherein each α-olefin monomer usually has 2 to 8 carbon atoms in the molecule. The polyolefin further includes, for example, copolymers of the α-olefin monomer with other monomers such as acrylic acid, acrylic acid esters, vinyl acetate, aromatic vinyl monomers such as styrene, and vinyl silane compounds.

As specific examples of the polyolefin, there can be mentioned linear low-density polyethylene (LLDPE), low-density polyethylene (LDPE), high-density polyethylene (HDPE), polypropylene, a polyethylene-polypropylene block copolymer, an ethylene-propylene random copolymer, polybutene-1, poly-4-methylpentene-1, an ethylene-vinyl acetate copolymer and an ethylene-acrylic acid copolymer. The polyolefin further includes halogenated polyolefins such as chlorinated polyethylene, brominated polyethylene and chlorosulfonated polyethylene as preferable examples. These polyolefins may be used as a combination of at least two thereof.

The amount of polyolefin (B) in the fiber-reinforced crosslinkable rubber composition of the present invention is in the range of 1 to 30 parts by weight, preferably 5 to 25 parts by weight, and more preferably 15 to 25 parts by weight, based on 100 parts by weight of HNBR (A).

The metal salt (C) of an α, β-ethylenically unsaturated lower carboxylic acid ester (hereinafter abbreviated to as "metal salt (C) " when appropriate) used in the present invention is a metal salt compound produced from an α,β-ethylenically unsaturated lower carboxylic acid and a metal compound.

As specific examples of the α,β-ethylenically unsaturated lower carboxylic acid, there can be mentioned α, β-ethylenically unsaturated monocarboxylic acids such as acrylic acid, methacrylic acid, crotonic acid and 3-butenoic acid; α, β-ethylenically unsaturated polycarboxylic acids such as maleic acid, fumaric acid and itaconic acid; and partial esters, such as partial methyl ester and partial ethyl ester, of α, β-ethylenically unsaturated polycarboxylic acids, which have at least one unreacted carboxyl group. Of these, methacrylic acid is preferable in view of good physical properties of a rubber product and ready availability.

The metal compound used for the preparation of the metal salt is not particularly limited provided that it is capable of forming a metal salt with the above-mentioned α,β-ethylenically unsaturated carboxylic acid. As preferable examples of metal in the metal compound, there can be mentioned zinc, aluminum, magnesium and calcium. The metal compound includes, for example, oxides, hydroxides and peroxides of these metals. Zinc compounds such as zinc oxide, zinc carbonate and zinc hydroxide are especially preferable.

The metal salt (C) may be used in the form of a metal salt of an α, β-ethylenically unsaturated lower carboxylic acid, but, it may be produced in the step of producing the fiber-reinforced crosslinkable rubber composition of the present invention, namely, by allowing an α,β-ethylenically unsaturated lower carboxylic acid to react with a metal compound in a crosslinkable rubber composition during preparation thereof.

In the case where the metal salt (C) is produced in the step of producing the fiber-reinforced crosslinkable rubber composition, it is preferable that a metal compound (C) is previously subjected to classification to remove coarse particles having a particle diameter of at least 20 µm therefrom so that the content of the coarse particles in the metal compound (C) is not larger than 5% by weight, in view of mechanical strengths of a resulting crosslinked rubber product. Similarly, in the case where the metal salt (C) is used as a previously prepared metal salt of an α, β-ethylenically unsaturated lower carboxylic acid, coarse particles are preferably removed prior to the use thereof.

When the metal salt (C) is produced in the step of producing the fiber-reinforced crosslinkable rubber composition, the proportion in amount of an α,β-ethylenically unsaturated lower carboxylic acid to a metal compound varies depending upon the particular atomic weight of the metal or other factors. For example, a zinc compound is used, the amount of zinc compound is preferably in the range of 0.5 to 3.2 moles and more preferably 0.5 to 2.5 moles per mole of the α, β-ethylenically unsaturated lower carboxylic acid.

The amount of the metal salt (C) of an α, β-ethylenically unsaturated lower carboxylic acid in the fiber-reinforced crosslinkable rubber composition of the present invention is in the range of 10 to 100 parts by weight, preferably 20 to 80 parts by weight, and more preferably 20 to 50 parts by weight, based on 100 parts by weight of HNBR (A).

The metal salt (C) used in the present invention has a function of enhancing tensile strength, abrasion resistance and fatigue resistance of a crosslinked product of the fiber-reinforced rubber composition of the present invention in cooperation with staple fibers (D) of a thermoplastic polymer having amide bonds in the backbone chain. The metal salt (C) has a further function of reducing a viscosity of the rubber composition (i.e., compound viscosity), which leads to an improvement of dispersibility of the staple fibers in the rubber composition.

The staple fibers (D) (hereinafter abbreviated to as "staple fibers (D) " when appropriate) of a thermoplastic polymer having amide bonds in the backbone chain are staple fibers of a thermoplastic polymer (D') having amide bonds in the backbone chain (this polymer is hereinafter abbreviated to as "polymer (D')" when appropriate), which preferably have an average length of 1 to 100 µm, and an average fiber diameter of not larger than 1 µm, more preferably 0.05 to 0.9 µm and especially preferably 0.2 to 0.8 µm. The staple fibers (D) preferably an aspect ratio (= ratio of fiber length/fiber diameter) of at least 10.

The thermoplastic polymer (D') having amide bonds in the backbone chain is a crystalline polymer preferably having a melting point of 135 to 350°C, more preferably 150 to 300°C and especially preferably 160 to 265°C, and preferably having a molecular weight of 10,000 to 100,000. The thermoplastic polymer (D') having amide bonds in the backbone chain includes a thermoplastic polyamide.

As specific examples of the thermoplastic polyamide, there can be mentioned nylon such as nylon 6, nylon 66, nylon 610, nylon 612, nylon 11, nylon 12, nylon MXD 6 and nylon 6-nylon 66 copolymer; and polycondensates of a diamine with a dicarboxylic acid, such as a polycondensate of xylenediamine with adipic acid, pimelic acid or azelaic acid, a polycondensate of tetramethylenediamine with terephthalic acid, and a polycondensate of octamethylenediamine with isophthalic acid. Of these, nylon having a melting point of 160 to 265°C is especially preferable.

The amount of staple fibers (D) of a thermoplastic polymer having amide bonds in the backbone chain in the fiber-reinforced rubber composition of the present invention is in the range of 1 to 30 parts by weight, preferably 5 to 25 parts by weight and more preferably 15 to 25 parts by weight, based on 100 parts by weight of HNBR (A).

For crosslinking the fiber-reinforced rubber composition of the present invention, the rubber composition must have incorporated therein a crosslinking agent. As the crosslinking agent, an organic peroxide is preferably used. If a crosslinking agent other than an organic peroxide is incorporated, an obtained crosslinked rubber product tends to have poor tensile stress, abrasion resistance and fatigue resistance.

The organic oxide used is not particularly limited and includes those which have conventionally been used for curing various rubber materials. Specific examples of the organic peroxide, there can be mentioned dicumyl peroxide, tert.-butyl cumyl peroxide, 1,3- or 1,4-bis(tert.-butylperoxyisopropyl)benzene, 1,1-di-tert.-butylperoxy-3,3-trimethylcyclohexane, 4,4-bis(tert.-butylperoxy)-n-butyl valerate, 2,5-dimethyl-2,5-di-tert.-butylperoxyhexane, 2,5-dimethyl-2,5-di-tert.-butylperoxyhexyne-3, 1,1-di-tert.-butylperoxy-3,5,5-trimethylcyclohexane, and di-tert.-butyl peroxide. These organic peroxides may be used as a combination of at least two thereof. The amount of organic peroxide is not particularly limited, but, is usually in the range of about 0.05 to 10 parts by weight based on 100 parts by weight of HNBR (A).

The organic peroxide may be used in combination with a crosslinking aid. The crosslinking aid includes, for example, polyfunctional monomers such as trimethylolpropane trimethacrylate, ethylene glycol diacrylate and triallyl isocyanurate. These crosslinking aids may be used as a combination of at least two thereof. The amount of crosslinking aid is usually in the range of about 0.05 to 10 parts by weight based on 100 parts by weight of HNBR (A).

According to the need, the fiber-reinforced rubber composition of the present invention may have incorporated therein auxiliary ingredients, which include, for example, reinforcing agents such as various carbon blacks and silica, fillers such as calcium carbonate, clay and a basic magnesium compound, an antioxidant, an antiozonant, a processing aid and a plasticizer. The amount of these auxiliary ingredients may be appropriately chosen depending upon the particular use of rubber, provided that the object and effect of the present invention are not banefully influenced.

The process for producing the organic peroxide-crosslinkable fiber-reinforced rubber composition of the present invention will now be described.

The fiber-reinforced rubber composition of the present invention is produced by kneading together 100 parts by weight of a nitrile group-containing highly saturated copolymer rubber (A), 1 to 30 parts by weight of polyolefin (B), 10 to 100 parts by weight of a metal salt of an α*,* β-ethylenically unsaturated lower carboxylic acid (C), and 1 to 30 parts by weight of staple fibers (D) made of a thermoplastic polymer having amide bonds in the backbone chain (D'), and optional auxiliary ingredients, at a temperature equal to or higher than the melting point of polyolefin (B) but lower than the melting point of the thermoplastic polymer having amide bonds in the backbone chain (D') by using an appropriate kneader.

If the kneading is carried out at a temperature lower than the melting point of polyolefin (B), polyolefin (B) is difficult to uniformly disperse in the fiber-reinforced rubber composition. If kneading is carried out at a temperature equal to or higher than the melting point of the thermoplastic polymer having amide bonds in the backbone chain (D'), staple fibers (D) of the thermoplastic polymer having amide bonds in the backbone chain (D') are melted, and the shape of staple fibers cannot be kept and the intended effect of reinforcing the rubber composition by staple fibers cannot be obtained.

Ingredients causing reduction of physical properties of a crosslinked rubber product when they are incorporated at a high temperature, such as a crosslinking agent, should be preferably incorporated after the other ingredients are kneaded together and at a low temperature.

For uniformly dispersing staple fibers (D) of a thermoplastic polymer having amide bonds in the backbone chain in the rubber composition, it is preferable to previously prepare a staple fiber-containing polymer composition (E) (hereinafter called as "staple fiber-containing master batch" when appropriate) by uniformly dispersing staple fibers (D) in a kneaded mixture of HNBR (A) and polyolefin (B), and preparing a crosslinkable fiber-reinforced rubber composition of the present invention by using the staple fiber-containing master batch.

The above-mentioned staple fiber-containing master batch is a staple fiber-containing polymer composition (E) previously prepared by kneading together a part or the whole of HNBR (A), a part or the whole of polyolefin (B), and staple fibers (D) made of a thermoplastic polymer having amide bonds in the backbone chain (D').

The fiber-reinforced rubber composition of the present invention can be produced by kneading together the previously prepared staple fiber-containing master batch, with the remainder of HNBR (A), the remainder of polyolefin (B), and a metal salt of an α, β-ethylenically unsaturated lower carboxylic acid (C), at a temperature equal to or higher than the melting point of polyolefin (B) but lower than the melting point of the thermoplastic polymer having amide bonds in the backbone chain (D') and under a shear rate in the range of 100/sec to 1,000/sec. This process results in a fiber-reinforced rubber composition wherein staple fibers (D) are uniformly dispersed.

The relative amounts of the above-mentioned ingredients in the staple fiber-containing master batch are not particularly limited, but, the staple fiber-containing master batch preferably comprises 100 parts by weight of HNBR (A), 10 to 500 parts by weight, more preferably 20 to 100 parts by weight of polyolefin (B), and 10 to 500 parts by weight, more preferably 20 to 100 parts by weight of staple fibers (D). The staple fiber-containing master batch may have incorporated therein other optional ingredients, provided that the object and effect of the present invention are not banefully influenced.

The process for preparing the above-mentioned staple fiber-containing master batch is not particularly limited. For example, a process wherein staple fibers (d) are incorporated in a previously kneaded mixture of HNBR (A) and polyolefin (B), or during kneading HNBR (A) with polyolefin (B) can be adopted so that staple fibers (D) are not molten. An especially preferable process for uniformly dispersing staple fibers (D) in a rubber composition matrix is described in Japanese Unexamined Patent Publication No. H9-87434.

The fiber-containing master batch preparing process described in the patent publication comprises incorporating a thermoplastic polymer having amide bonds in the backbone chain (D') in HNBR (A) and polyolefin (B), kneading together the thus-obtained mixture, and then, drawing and/or rolling the kneaded mixture whereby the thermoplastic polymer having amide bonds in the backbone chain (D') is formed into staple fibers (D) dispersed in a matrix comprised of HNBR (A) and polyolefin (B).

More specifically, the above-mentioned process for preparing a fiber-containing master batch comprises (1) a step of melting and kneading HNBR (A) with polyolefin (B) to prepare a matrix of (A) and (B), (2) a step of melting and kneading the matrix together with the polymer ingredient (D') and extruding the resulting kneaded mixture at a temperature higher than the melting point of the polymer ingredient (D'), and (3) a step of drawing and/or rolling the thus-obtained extrudate at a temperature lower than the melting point of the polymer ingredient (D').

In the case where the above-mentioned process for preparing a fiber-containing master batch is adopted for the preparation of the fiber-reinforced rubber composition of the present invention, a part or the whole of HNBR (A) and a part or the whole of polyolefin (B) can be used for the preparation of the fiber-containing master batch.

In the case where the previously prepared staple fiber-containing master batch is used for the preparation of the fiber-reinforced rubber composition of the present invention, HNBR (A), metal salt (C) and other ingredients are incorporated with the staple fiber-containing master batch so that a rubber composition having the intended composition is formulated, and the resulting composition is kneaded together. In this case, the order of incorporating the respective ingredients is not particularly limited. For example, the additional ingredients (A), (B) and (C) are previously mixed and kneaded, and the resulting kneaded mixture is kneaded together with the staple fiber-containing master batch (E), or, the additional ingredients (A), (B) and (C) are mixed and kneaded together with the staple fiber-containing master batch (E).

When HNBR (A) and/or polyolefin (B) is additionally incorporated in the staple fiber-containing master batch, the particular HNBR (A) and/or polyolefin (B) may not be the same as, but may be different from the HNBR (A) and/or polyolefin (B) which are contained in the master batch. It is preferable that the whole amount of polyolefin (B) required for the fiber-reinforced rubber composition of the present invention is contained in the staple fiber-containing master batch so that there is no need of additionally incorporating polyolefin (B) with the master batch. This is because mixing of (B) with the master batch can be omitted and thus, kneading of additional ingredients with the master batch can be easily carried out.

When the staple fiber-containing master batch is kneaded with additional ingredients, kneading must be carried out at a temperature equal to or higher than the melting point of polyolefin (B) but lower than the melting point of thermoplastic polymer (D') constituting staple fibers (D). If the kneading is carried out at a temperature of not lower than the melting point of thermoplastic polymer (D'), the shape of staple fibers (D) disappears and the object of the present invention cannot be achieved.

The shear rate for the kneading of the master batch with the additional ingredients also is important. The lower limit of the shear rate is at least 100/sec, preferably at least 120/sec and more preferably at least 150/sec, and the upper limit of the shear rate is not larger than 1000/sec, preferably not larger than 500/sec and more preferably not larger than 250/sec. When the shear rate is too low, staple fibers (D) become difficult to uniformly disperse in a matrix, i.e., a kneaded mixture of HNBR (A) and polyolefin (B). In contrast, when the shear rate is too large, staple fibers (D) are broken into a too small size to achieve the object of the present invention.

In view of the fact that the kneading temperature is important for the above-mentioned reason, the kneading temperature must be beneficially controlled. More specifically, the kneaded mixture must be cooled when its temperature becomes too high due to frictional heat upon kneading. The temperature is difficult to desirably control only by external cooling of a kneader because the temperature distribution within the kneader becomes uneven. When the shear rate is maintained at a constant value within the above-mentioned range, the efficiency of heat dissipation can be desirably enhanced and thus the temperature can easily be controlled by varying the amount of ingredients to be charged in the kneader depending upon the type of kneader.

Ingredients causing reduction of physical properties of a crosslinked rubber product when they are incorporated at a high temperature, such as a crosslinking agent, should be preferably incorporated at a low temperature after the other ingredients are kneaded together with a staple fiber-containing master batch.

The method of crosslinking the crosslinkable fiber-reinforced rubber composition of the present invention while the rubber composition is shaped into a shaped rubber product, is not particularly limited. Shaping is carried out by the conventional methods employed for the production of various rubber articles, which include, for example, compression molding, transfer molding, injection molding and extruding. The reaction of crosslinking the fiber-reinforced rubber composition is carried out either simultaneously with the shaping of the rubber composition under heated conditions, or after the rubber composition is shaped into a shaped article.

The crosslinking temperature is preferably in the range of 140 to 180°C. The crosslinking time can be appropriately chosen depending upon the shape and dimension, especially thickness, of a shaped article, but is preferably in the range of 2 to 30 minutes. After the crosslinking, a crosslinked rubber product can be subjected to a second crosslinking for removing strain and improving the physical properties of the rubber product. The conditions for the second crosslinking are not particularly limited, but, the crosslinking temperature is preferably in the range of 50 to 180°C and the crosslinking time is preferably in the range of 1 to 5 hours.

The organic peroxide-crosslinkable fiber-reinforced rubber composition of the present invention can give a crosslinked rubber product having high tensile strength, high tensile stress, and excellent abrasion resistance and fatigue resistance. Therefore the fiber-reinforced rubber composition is especially suitable for the production of frictional transmission belts such as a V-belt and a V-ribbed belt, transmission belts such as a gear belt, transportation belts, hoses, boots and bushings.

The present invention will now be described in detail by the following examples and comparative examples. In the examples and comparative examples, parts and percents are by weight unless otherwise specified.

The methods of preparing test specimens and testing the specimens, employed in the examples and comparative examples, are as follows.

### (1) Tensile Tests

According to JIS K6251, a #3 dummbbell specimen for tensile tests was punched from a crosslinked rubber sheet having a thickness of 1 mm so that the length is in alignment with the grain direction, and tensile strength, 100% tensile stress, breaking elongation and hardness (duro A) were measured.

### (2) Abrasion Tests

According to JIS K6264, a test specimen was prepared, and abrasion loss was measured by using a Pico-type abrasion test machine. The test results were expressed by an index stipulated in JIS K6264 assuming that the abrasion loss of Comparative Example 1 was 100. The larger the index, the better the abrasion resistance.

### (3) Fatigue Tests

A #3 dummbbell specimen was prepared according to JIS K6251 by using a load fatigue testing machine available from Kamishima Seisakusho K.K. The specimen was elongated by applying a load increasing from 0 kgf to 10 kgf, and then was shrunk by decreasing the load to 0 kgf. This operation of elongation-shrinkage was repeated until the specimen was broken, and the number of times of elongation was counted. The fatigue resistance was expressed by an index assuming that the abrasion resistance of Comparative Example 1 was 100. The larger the index, the better the fatigue resistance.

### Example 1, and Comparative Examples 1 and 2

Organic peroxide-crosslinkable fiber-reinforced rubber compositions were prepared according to the recipes shown in Table 1.

HNBR, prepared by hydrogenating NBR, methacrylic acid and zinc oxide were kneaded together by a 1.7 liter B-type Banbury mixer to prepare a kneaded rubber mixture comprising HNBR and zinc methacrylate.

The thus-obtained kneaded rubber mixture and a staple fiber-containing master batch (tradename "SHP LA5060" available from Ube Industries Co.; comprised of HNBR having an iodine value of not larger than 30, 25 parts; polyethylene having a melting point of 110-130°C and a melt flow index of 5-8 g/10 min, 25 parts; and staple fibers of nylon 6 having a melting point of 200-220°C and a molecular weight of 10,000-50,000, 25 parts) were charged in a pressure kneader at a charge ratio of 60% by volume. The number of revolutions of the two blades of kneader were set at 45 rpm and 40 rpm, respectively. Kneading was carried out for 30 minutes while the kneading temperature was controlled to 160°C, to prepare a fiber-reinforced rubber composition having incorporated therein nylon staple fibers. The shear rate at kneading was 460/sec.

Ingredients other than the organic peroxide, shown in Table 1, were incorporated in the fiber-reinforced rubber composition having incorporated therein nylon staple fibers, and the mixture was kneaded at 50-60°C by a mixing roll, and finally, the kneaded mixture was incorporated and kneaded together with the organic peroxide to obtain an organic peroxide-crosslinkable fiber-reinforced rubber composition.

As seen from Table 1, an organic peroxide-crosslinkable fiber-reinforced rubber composition of the present invention (Example 1), prepared by mixing a kneaded mixture of HNBR with zinc methacrylate, together with a staple fiber-containing master batch, gives a crosslinked rubber product having excellent abrasion resistance and fatigue resistance and greatly improved 100% tensile stress, when the rubber composition is crosslinked with an organic peroxide.

In contrast, a rubber composition having not incorporated therein a staple fiber-containing master batch (Comparative Example 1) and a rubber composition having not incorporated therein zinc methacrylate (Comparative Example 2) give crosslinked rubber products having poor abrasion resistance and fatigue resistance and reduced 100% tensile stress.

**Table 1**

| | Ex. 1 | Com. Ex.1 | Com. Ex.2 |
|---|---|---|---|
| Composition: | | | |
| HNBR-1 *1 | 75 | 100 | 75 |
| Methacrylic acid | 15 | 20 | - |
| Zinc oxide | 10 | 15 | - |
| Staple fiber-contg. master batch | 75 | - | 75 |
| SRF carbon black | 20 | 25 | 20 |
| Plasticizer *2 | 5 | 7 | 5 |
| Organic peroxide *3 | 6 | 8 | 6 |
| Tensile test: | | | |
| (Crosslinked at 170°C for 20 min) | | | |
| Tensile strength (MPa) | 30.2 | 32.0 | 23.6 |
| Elongation (%) | 170 | 480 | 70 |
| 100% Tensile stress (MPa) | 28.4 | 4.1 | - |
| Hardness (duro A) | 87 | 73 | 85 |
| Abrasion test: | | | |
| (Crosslinked at 170°C for 20 min) | | | |
| Abrasion resistance index | 150 | 100 | 76 |
| Fatigue test: | | | |
| (Crosslinked at 170°C for 20 min) | | | |
| Fatigue resistance index | 130 | 100 | 55 |

| | | | |
|---|---|---|---|
| *1 Tradename "Zetpol" 2010H available from Zeon Corporation, iodine value 11, bound acrylonitrile content 36%, Mooney viscosity 120 *2 Tradename "ADK cizer" C-8 available from Asahi Denka Kogyo K.K. *3 Tradename "Vul-Cup" 40KE available from Hercules Co., containing 40% of 1,3-bis(tert.-butylperoxyisopropyl)benzene | | | |

### Example 2, and Comparative Example 3

According to the recipe shown in Table 2 and using the same HNBR, and staple fiber-containing master batch, as those used in Example 1, an organic peroxide-crosslinkable fiber-reinforced rubber composition was prepared and then crosslinked with an organic peroxide, and tensile test, abrasion test and fatigue test were carried out, by the same procedures as described in Example 1. The results are shown in Table 2.

**Table 2**

| | Ex. 2 | Com. Ex. 3 | Com. Ex. 1 |
|---|---|---|---|
| Composition: | | | |
| HNBR-1 *1 | 70 | 70 | 100 |
| Methacrylic acid | 15 | - | 20 |
| Zinc oxide | 10 | - | 15 |
| Staple fiber-contg. master batch | 90 | 90 | - |
| SRF carbon black | 20 | 20 | 25 |
| Plasticizer *2 | 5 | 5 | 7 |
| Organic peroxide *3 | 6 | 6 | 8 |
| Tensile test: | | | |
| (Crosslinked at 170°C for 20 min) | | | |
| Tensile strength (MPa) | 30.1 | 32.1 | 32.0 |
| Elongation (%) | 150 | 50 | 480 |
| 100% Tensile stress (MPa) | 28.4 | - | 4.1 |
| Hardness (duro A) | 90 | 89 | 73 |
| Abrasion test: | | | |
| (Crosslinked at 170°C for 20 min) | | | |
| Abrasion resistance index | 150 | 70 | 100 |
| Fatigue test: | | | |
| (Crosslinked at 170°C for 20 min) | | | |
| Fatigue resistance index | 125 | 45 | 100 |

| | | | |
|---|---|---|---|
| *1, *2 and *3 Same as in Table 1 | | | |

As seen from Table 2, an organic peroxide-crosslinkable fiber-reinforced rubber composition of the present invention (Example 2), prepared by mixing a kneaded mixture of HNBR with zinc methacrylate, together with a staple fiber-containing master batch, gives a crosslinked rubber product having excellent abrasion resistance and fatigue resistance and greatly improved 100% tensile stress, when the rubber composition is crosslinked with an organic peroxide.

In contrast, a rubber composition having not incorporated therein a staple fiber-containing master batch (Comparative Example 1) and a rubber composition having not incorporated therein zinc methacrylate (Comparative Example 3) give crosslinked rubber products having poor abrasion resistance and fatigue resistance and reduced 100% tensile stress.

### Examples 3 to 5, and Comparative Examples 4 to 6

75 parts of nitrile group-containing highly saturated copolymer rubber (hydrogenated NBR, tradename "Zetpol" 2010H available from Zeon Corporation; iodine value 11, bound acrylonitrile content 36%, Mooney viscosity (ML₁₊₄, 100°C) 120), 15 parts of methacrylic acid and 10 parts of zinc oxide were kneaded at 100-150°C by a 1.7 liter B-type Banbury mixer to prepare a kneaded mixture A comprising HNBR and zinc methacrylate.

The kneaded mixture A and 75 parts of a staple fiber-containing master batch (tradename "SHP LA5060" available from Ube Industries Co.) were kneaded together by using a pressure kneader to prepare an organic peroxide-crosslinkable fiber-reinforced rubber composition B. The kneading was carried out under the conditions of shear rate, charging ratio, kneading temperature and kneading time, shown in Table 3. The number of revolutions of two blades of kneader were set at 20 rpm and 45 rpm, respectively.

To 155 parts of the above-mentioned rubber composition B, 10 parts of SRF carbon black and an organic peroxide (tradename "Vul-Cup" 40KE available from Hercules Co., containing 40% of 1,3-bis(tert.-butylperoxyisopropyl)benzene) were incorporated, and the mixture was kneaded together by using a mixing roll at 50-60°C to prepare a crosslinkable rubber composition sheet. The crosslinkable rubber sheet was crosslinked under the conditions shown in Table 3 to produce a crosslinked rubber product. The properties of the crosslinked rubber product were evaluated by the same methods as described in Example 1. The results are shown in Table 3.

**Table 3**

| | Ex. 3 | Ex. 4 | Ex. 5 | C.E. 4 | C.E. 5 | C.E. 6 |
|---|---|---|---|---|---|---|
| Kneading conditions: | | | | | | |
| Shearing rate (/sec) | 210 | 170 | 210 | 210 | 90 | 210 |
| Charge ratio (%) | 60 | 70 | 60 | 50 | 60 | 60 |
| Temperature (°C) | 160 | 160 | 160 | 120 | 160 | 220 |
| Time (min) | 30 | 30 | 30 | 30 | 30 | 40 |
| Fiber dispersibility *1 | 3 | 3 | 3 | 2 | 1 | 3 |
| Tensile test: | | | | | | |
| (Crosslinked at 170°C for 20 min) | | | | | | |
| Tensile strength (MPa) | 37.2 | 34.6 | 35.6 | 34.4 | 30.2 | 20.4 |
| Elongation (%) | 112 | 122 | 111 | 70 | 50 | 380 |
| 100% Tensile stress (MPa) | 30.3 | 29.3 | 29.8 | - | - | 4.5 |
| Hardness (duro A) | 88 | 87 | 88 | 88 | 87 | 87 |
| Abrasion test: | | | | | | |
| (Crosslinked at 170°C for 20 min) | | | | | | |
| Abrasion resistance index | 150 | 150 | 150 | 115 | 110 | 105 |
| Fatigue test: | | | | | | |
| (Crosslinked at 170°C for 20 min) | | | | | | |
| Fatigue resistance index | 130 | 130 | 130 | 80 | 80 | 100 |

| | | | | | | |
|---|---|---|---|---|---|---|
| *1 Dispersibility of staple fibers in rubber composition | | | | | | |

Dispersibility of nylon 6 staple fibers in a rubber composition was determined as follows. One surface of the crosslinkable rubber composition sheet having a size of 15 cm × 15 cm, taken from a mixing roll, was visually observed, and the surface state was expressed by the following three ratings. The results are shown in Table 3.
Rating 3: Exposed fibers are not found on the surface and fibers are uniformly dispersed.
Rating 2: One or two fibers are exposed on the surface.
Rating 3: A multiplicity of fibers are exposed on the surface.

When the staple fiber-containing master batch was observed in the fiber-oriented direction and in the transverse direction by a scanning electron microscope, staple fibers having an average fiber length of 10 µm and an average fiber diameter of 0.5 µm were found.

In table 3, Examples 3 to 5 (present invention) show the results obtained by a process wherein the above-mentioned kneaded mixture A and the staple fiber-containing master batch are kneaded together at a shear rate of 170/sec to 210/sec and a temperature of 160°C, which is higher than the melting point of polyethylene and lower than the melting point of nylon 6, to prepare a fiber-reinforced rubber composition. As seen from Table 3, organic peroxide-crosslinkable fiber-reinforced rubber compositions prepared under the kneading conditions employed in Examples 3 to 5 exhibit good dispersibility of nylon 6 staple fibers therein, and give crosslinked rubber products having greatly improved 100% tensile stress and excellent abrasion resistance and fatigue resistance.

In contrast, where kneading is carried out at a temperature of 120°C, at which polyethylene is not sufficiently melted (Comparative Example 4), where kneading is carried out at a shear rate of 90/sec (Comparative Example 5), or where kneading is carried out at a temperature of 220°C, which is higher than the melting point of nylon 6 (Comparative Example 6), the dispersibility of nylon 6 staple fibers is not improved and a crosslinked rubber product has reduced 100% tensile stress and poor abrasion resistance and fatigue resistance.

The organic peroxide-crosslinkable fiber-reinforced rubber composition of the present invention is suitable for the production of various rubber products including belts, hoses and bushings. The resulting rubber products have good performance.

## Claims

1. An organic peroxide-crosslinkable fiber-reinforced rubber composition comprising 100 parts by weight of a nitrile group-containing highly saturated copolymer rubber (A) having an iodine value not larger than 120, 1 to 30 parts by weight of polyolefin (B), 10 to 100 parts by weight of a metal salt of an α, β-ethylenically unsaturated lower carboxylic acid (C), and 1 to 30 parts by weight of staple fibers (D) made of a thermoplastic polymer having amide bonds in the backbone chain obtainable by incorporating a staple fiber-containing polymer composition (E) comprising a part or the whole of a nitrile group-containing highly saturated copolymer rubber (A), a part or the whole of polyolefin (B), and staple fibers (D) made of a thermoplastic polymer having amide bonds in the backbone chain (D'), with the remainder of the nitrile group-containing highly saturated copolymer rubber (A), the remainder of polyolefin (B), and a metal salt of an α,β-ethylenically unsaturated lower carboxylic acid (C), and
kneading the thus-prepared mixture at a temperature equal to or higher than the melting point of polyolefin (B) but lower than the melting point of the thermoplastic polymer having amide bonds in the backbone chain (D') and under a shear rate in the range of 100/sec to 1,000/sec.

2. The organic peroxide-crosslinkable fiber-reinforced rubber composition according to claim 1, wherein the nitrile group-containing highly saturated copolymer rubber (A) is a rubber obtained by copolymerizing an α, β-ethylenically unsaturated nitrile monomer with other monomer copolymerizable with the α, β-ethylenically unsaturated nitrile monomer, or a hydrogenated rubber obtained by hydrogenating a rubber obtained by copolymerizing an α,β-ethylenically unsaturated nitrile monomer with other monomer copolymerizable with the α, β-ethylenically unsaturated nitrile monomer.

3. The organic peroxide-crosslinkable fiber-reinforced rubber composition according to claim 2, wherein the nitrile group-containing highly saturated copolymer rubber (A) is a hydrogenated rubber obtained by hydrogenating a rubber obtained by copolymerizing acrylonitrile with a conjugated diene monomer.

4. The organic peroxide-crosslinkable fiber-reinforced rubber composition according to any one of claims 1 to 3, wherein the polyolefin (B) is a homopolymer of an α-olefin monomer having 2 to 8 carbon atoms in the molecule or a copolymer of at least two α-olefin monomers.

5. The organic peroxide-crosslinkable fiber-reinforced rubber composition according to any one of claims 1 to 3, wherein the metal salt of an α, β-ethylenically unsaturated lower carboxylic acid (C) is a metal salt formed from an α, β-ethylenically unsaturated polycarboxylic acid and zinc oxide.

6. The organic peroxide-crosslinkable fiber-reinforced rubber composition according to any one of claims 1 to 3, wherein the metal salt of an α, β-ethylenically unsaturated lower carboxylic acid (C) is a metal salt formed from methacrylic acid and zinc oxide.

7. The organic peroxide-crosslinkable fiber-reinforced rubber composition according to any one of claims 1 to 3, wherein the thermoplastic polymer having amide bonds in the backbone chain for the staple fibers (D) is a thermoplastic polyamide having a melting point in the range of 135 to 350°C.

8. A process for producing an organic peroxide-crosslinkable fiber-reinforced rubber composition as claimed in any one of claims 1 to 7, which comprises:
incorporating a staple fiber-containing polymer composition (E) comprising a part or the whole of a nitrile group-containing highly saturated copolymer rubber (A) having an iodine value not larger than 120, a part or the whole of polyolefin (B), and staple fibers (D) made of a thermoplastic polymer (D') having amide bonds in the backbone chain, with the remainder of the nitrile group-containing highly saturated copolymer rubber (A), the remainder of polyolefin (B), and a metal salt of an α, β-ethylenically unsaturated lower carboxylic acid (C), and
kneading the thus-prepared mixture at a temperature equal to or higher than the melting point of polyolefin (B) but lower than the melting point of the thermoplastic polymer having amide bonds in the backbone chain (D') and under a shear rate in the range of 100/sec to 1,000/sec.

9. The process for producing an organic peroxide-crosslinkable fiber-reinforced rubber composition according to claim 8, wherein the staple fiber-containing polymer composition (E) comprises 100 parts by weight of a nitrile group-containing highly saturated copolymer rubber (A), 10 to 500 parts by weight of polyolefin (B), and 10 to 500 parts by weight of staple fibers (D) of the thermoplastic polymer (D') having an amide bond in the backbone chain.

## Patentansprüche

1. Mit organischem Peroxid vernetzbare faserverstärkte Kautschukzusammensetzung, umfassend 100 Gewichtsteile eines Nitrilrest enthaltenden hochgesättigten Copolymerkautschuks (A) mit einem Iodwert von nicht größer als 120, 1 bis 30 Gewichtsteile Polyolefin (B), 10 bis 100 Gewichtsteile eines Metallsalzes einer α,β-ethylenisch ungesättigten Niedercarbonsäure (C) und 1 bis 30 Gewichtsteile Stapelfasern (D), hergestellt aus einem thermoplastischen Polymer mit Amidbindungen in der Grundgerüstkette, erhältlich durch Einschließen einer Stapelfasern enthaltenden Polymerzusammensetzung (E), umfassend einen Teil oder das Ganze eines Nitrilrest enthaltenden hochgesättigten Copolymerkautschuks (A), einen Teil oder das Ganze des Polyolefins (B), und Stapelfasern (D), hergestellt aus einem thermoplastischen Polymer mit Amidbindungen in der Grundgerüstkette (D'), mit dem Rest des Nitrilrest enthaltenden hochgesättigten Copolymerkautschuks (A), dem Rest des Polyolefins (B) und einem Metallsalz einer α,β-ethylenisch ungesättigten Niedercarbonsäure (C), und Kneten des so hergestellten Gemischs bei einer Temperatur, die gleich oder höher als der Schmelzpunkt des Polyolefins (B), aber niedriger als der Schmelzpunkt des thermoplastischen Polymers mit Amidbindungen in der Grundgerüstkette (D') ist, und bei einer Scherrate im Bereich von 100/sec bis 1000/sec.

2. Mit organischem Peroxid vernetzbare faserverstärkte Kautschukzusammensetzung gemäß Anspruch 1, wobei der Nitrilrest enthaltende hochgesättigte Copolymerkautschuk (A) ein Kautschuk ist, erhalten durch Copolymerisieren eines α,β-ethylenisch ungesättigten Nitrilmonomers mit einem anderen Monomer, welches mit dem α,β-ethylenisch ungesättigten Nitrilmonomer copolymerisierbar ist, oder ein hydrierter Kautschuk ist, der durch Hydrieren eines Kautschuks, erhalten durch Copolymerisieren eines α,β-ethylenisch ungesättigten Nitrilmonomers mit einem anderen Monomer, welches mit dem α,β-ethylenisch ungesättigten Nitrilmonomer copolymerisierbar ist, erhalten wird.

3. Mit organischem Peroxid vernetzbare faserverstärkte Kautschukzusammensetzung gemäß Anspruch 2, wobei der Nitrilrest enthaltende hochgesättigte Copolymerkautschuk (A) ein hydrierter Kautschauk ist, der durch Hydrieren eines Kautschuks, erhalten durch Copolymerisieren von Acrylonitril mit einem konjugierten Dienmonomer, erhalten wird.

4. Mit organischem Peroxid vernetzbare faserverstärkte Kautschukzusammensetzung gemäß einem der Ansprüche 1 bis 3, wobei das Polyolefin (B) ein Homopolymer eines α-Olefinmonomers mit 2 bis 8 Kohlenstoffatomen im Molekül oder ein Copolymer mindestens zweier α-Olefinmonomere ist.

5. Mit organischem Peroxid vernetzbare faserverstärkte Kautschukzusammensetzung gemäß einem der Ansprüche 1 bis 3, wobei das Metallsalz einer α,β-ethylenisch ungesättigten Niedercarbonsäure (C) ein Metallsalz, gebildet aus einer α,β-ethylenisch ungesättigten Polycarbonsäure und Zinkoxid, ist.

6. Mit organischem Peroxid vernetzbare faserverstärkte Kautschukzusammensetzung gemäß einem der Ansprüche 1 bis 3, wobei das Metallsalz einer α,β-ethylenisch ungesättigten Niedercarbonsäure (C) ein Metallsalz, gebildet aus Methacrylsäure und Zinkoxid, ist.

7. Mit organischem Peroxid vernetzbare faserverstärkte Kautschukzusammensetzung gemäß einem der Ansprüche 1 bis 3, wobei das thermoplastische Polymer mit Amidbindungen in der Grundgerüstkette für die Stapelfasern (D) ein thermoplastisches Polyamid mit einem Schmelzpunkt im Bereich von 135 bis 350°C ist.

8. Verfahren zur Herstellung einer mit organischem Peroxid vernetzbaren faserverstärkten Kautschukzusammensetzung gemäß einem der Ansprüche 1 bis 7, welches umfasst: Einschließen einer Stapelfasern enthaltenden Polymerzusammensetzung (E), umfassend einen Teil oder das Ganze eines einen Nitrilrest enthaltenden Copolymerkautschuks (A) mit einem Iodwert von nicht größer als 120, einen Teil oder das Ganze des Polyolefins (B), und Stapelfasern (D), hergestellt aus einem thermoplastischen Polymer (D') mit Amidbindungen in der Grundgerüstkette, mit dem Rest des Nitrilrest enthaltenden hochgesättigten Copolymerkautschuks (A), dem Rest des Polyolefins (B) und einem Metallsalz einer α,β-ethylenisch ungesättigten Niedercarbonsäure (C), und
Kneten des so hergestellten Gemischs bei einer Temperatur, die gleich oder höher als der Schmelzpunkt des Polyolefins (B), aber niedriger als der Schmelzpunkt des thermoplastischen Polymers mit Amidbindungen in der Grundgerüstkette (D') ist, und bei einer Scherrate im Bereich von 100/sec bis 1000/sec.

9. Verfahren zur Herstellung einer mit organischem Peroxid vernetzbaren faserverstärkten Kautschukzusammensetzung gemäß Anspruch 8, wobei die Stapelfasern enthaltende Polymerzusammensetzung (E) 100 Gewichtsteile eines Nitrilrest enthaltenden hochgesättigten Copolymerkautschuks (A), 10 bis 500 Gewichtsteile Polyolefin (B) und 10 bis 500 Gewichtsteile Stapelfasern (D) des thermoplastischen Polymers (D') mit einer Amidbindung in der Grundgerüstkette, umfasst.

## Revendications

1. Composition de caoutchouc à renfort de fibres, réticulable à l'aide d'un peroxyde organique, qui comprend :
- 100 parties en poids d'un caoutchouc copolymère (A) hautement saturé, comportant des groupes nitrile et présentant un indice d'iode d'au plus 120,
- 1 à 30 parties en poids d'une polyoléfine (B),
- 10 à 100 parties en poids d'un sel métallique (C) d'acide carboxylique inférieur à insaturation α,β-éthylénique,
- et 1 à 30 parties en poids de fibres courtes (D) en un polymère thermoplastique dont la chaîne de squelette comporte des enchaînements de type amide ;
et que l'on peut obtenir
- en incorporant, dans une composition (E) de polymère contenant des fibres courtes, qui comprend tout ou partie du caoutchouc copolymère (A) hautement saturé comportant des groupes nitrile, tout ou partie de la polyoléfine (B) et les fibres courtes (D) en un polymère thermoplastique (D') dont la chaîne de squelette comporte des enchaînements de type amide, le reste du caoutchouc copolymère (A) hautement saturé comportant des groupes nitrile, le reste de la polyoléfine (B) et le sel métallique (C) d'acide carboxylique inférieur à insaturation α,β-éthylénique,
- et en malaxant le mélange ainsi préparé à une température égale ou supérieure au point de fusion de la polyoléfine (B), mais inférieure au point de fusion du polymère thermoplastique (D') dont la chaîne de squelette comporte des enchaînements de type amide, et avec une vitesse de cisaillement de 100 à 1000 s⁻¹.

2. Composition de caoutchouc à renfort de fibres, réticulable à l'aide d'un peroxyde organique, conforme à la revendication 1, dans laquelle le caoutchouc copolymère (A) hautement saturé comportant des groupes nitrile est un caoutchouc obtenu par copolymérisation d'un monomère nitrile à insaturation α,β-éthylénique et d'un autre monomère copolymérisable avec le monomère nitrile à insaturation α,β-éthylénique, ou un caoutchouc hydrogéné obtenu par hydrogénation d'un caoutchouc obtenu par copolymérisation d'un monomère nitrile à insaturation α,β-éthylénique et d'un autre monomère copolymérisable avec le monomère nitrile à insaturation α,β-éthylénique.

3. Composition de caoutchouc à renfort de fibres, réticulable à l'aide d'un peroxyde organique, conforme à la revendication 2, dans laquelle le caoutchouc copolymère (A) hautement saturé comportant des groupes nitrile est un caoutchouc hydrogéné obtenu par hydrogénation d'un caoutchouc obtenu par copolymérisation d'acrylonitrile et d'un monomère diène conjugué.

4. Composition de caoutchouc à renfort de fibres, réticulable à l'aide d'un peroxyde organique, conforme à l'une des revendications 1 à 3, dans laquelle la polyoléfine (B) est un homopolymère d'un monomère de type α-oléfine dont la molécule comporte 2 à 8 atomes de carbone, ou un copolymère d'au moins deux monomères de type α-oléfine.

5. Composition de caoutchouc à renfort de fibres, réticulable à l'aide d'un peroxyde organique, conforme à l'une des revendications 1 à 3, dans laquelle le sel métallique (C) d'acide carboxylique inférieur à insaturation α,β-éthylénique est un sel métallique formé à partir d'un acide polycarboxylique à insaturation α,β-éthylénique et d'oxyde de zinc.

6. Composition de caoutchouc à renfort de fibres, réticulable à l'aide d'un peroxyde organique, conforme à l'une des revendications 1 à 3, dans laquelle le sel métallique (C) d'acide carboxylique inférieur à insaturation α,β-éthylénique est un sel métallique formé à partir d'acide méthacrylique et d'oxyde de zinc.

7. Composition de caoutchouc à renfort de fibres, réticulable à l'aide d'un peroxyde organique, conforme à l'une des revendications 1 à 3, dans laquelle le polymère thermoplastique dont la chaîne de squelette comporte des enchaînements de type amide et qui est le constituant des fibres courtes (D) est un polyamide thermoplastique dont le point de fusion se situe dans l'intervalle allant de 135 à 350 °C.

8. Procédé de production d'une composition de caoutchouc à renfort de fibres, réticulable à l'aide d'un peroxyde organique, conforme à l'une des revendications 1 à 7, lequel procédé comporte :
- le fait d'incorporer, dans une composition (E) de polymère contenant des fibres courtes, qui comprend tout ou partie du caoutchouc copolymère (A) hautement saturé comportant des groupes nitrile et présentant un indice d'iode d'au plus 120, tout ou partie de la polyoléfine (B) et les fibres courtes (D) en un polymère thermoplastique (D') dont la chaîne de squelette comporte des enchaînements de type amide, le reste du caoutchouc copolymère (A) hautement saturé comportant des groupes nitrile, le reste de la polyoléfine (B) et le sel métallique (C) d'acide carboxylique inférieur à insaturation α,β-éthylénique,
- et le fait de malaxer le mélange ainsi préparé à une température égale ou supérieure au point de fusion de la polyoléfine (B), mais inférieure au point de fusion du polymère thermoplastique (D') dont la chaîne de squelette comporte des enchaînements de type amide, et avec une vitesse de cisaillement de 100 à 1000 s⁻¹.

9. Procédé de production d'une composition de caoutchouc à renfort de fibres, réticulable à l'aide d'un peroxyde organique, conforme à la revendication 8, dans lequel la composition (E) de polymère contenant des fibres courtes comprend 100 parties en poids du caoutchouc copolymère (A) hautement saturé comportant des groupes nitrile, 10 à 500 parties en poids de la polyoléfine (B), et 10 à 500 parties en poids des fibres courtes (D) en un polymère thermoplastique (D') dont la chaîne de squelette comporte des enchaînements de type amide.
